# FASCICULE DE BREVET EUROPEEN

(11) **EP 3 946 978 B1**
(45) Date de publication et mention de la délivrance du brevet: **22.03.2023**
(21) Numéro de dépôt: 20713013.9
(22) Date de dépôt: 26.03.2020
(51) Int. Cl.: B60C 13/02, B60C 11/01

(54) **PNEUMATIQUE POUR VEHICULE AGRICOLE COMPRENANT UNE BANDE DE ROULEMENT**
REIFEN FÜR EIN LANDWIRTSCHAFTLICHES FAHRZEUG, WOBEI DER REIFEN EINE LAUFFLÄCHE AUFWEIST
TYRE FOR AN AGRICULTURAL VEHICLE, THE TYRE COMPRISING A TREAD

(30) Priorité: 29.03.2019 FR 1903413
(43) Date de publication de la demande: 09.02.2022
(73) Titulaire: COMPAGNIE GENERALE DES ETABLISSEMENTS MICHELIN, 63000 Clermont-Ferrand (FR)
(72) Inventeur: PERRIN, Frédéric, 63040 Clermont-Ferrand Cedex 9 (FR); DEAN, David, 63040 Clermont-Ferrand Cedex 9 (FR); FERRI, Johan, 63040 Clermont-Ferrand Cedex 9 (FR)
(74) Mandataire: Millanvois, Patrick Jacques Jean
(86) Numéro de dépôt international: PCT/EP2020/058603
(87) Numéro de publication internationale: WO 2020/201027

(56) Documents cités:
- EP-A1- 2 141 031
- EP-A1- 3 150 405
- EP-A1- 3 281 868
- JP-A- 2005 263 055

## Description

### Domaine technique

La présente invention concerne un pneumatique destiné à équiper un véhicule agricole et, plus particulièrement, un pneumatique dont la performance en traction dans les champs est améliorée.

Bien que non limitée à cette application, l'invention sera plus particulièrement décrite en référence à un véhicule agricole polyvalent c'est-à-dire un véhicule pouvant rouler aussi bien dans les champs que sur route, tel qu'un tracteur agricole, une voiture tout-terrain (4*4, buggy), etc...

Un tracteur agricole est plus particulièrement destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, les pneumatiques d'un tracteur agricole doivent présenter un compromis de performances entre la traction dans les champs, la résistance aux arrachements, la résistance à l'usure sur route, la résistance au roulement, le confort vibratoire.

Les performances en traction d'un tracteur agricole sont particulièrement recherchées pour un usage dans les champs dont les sols sont peu cohésifs tels que des sols sableux ou boueux.

### Technique antérieure

Il est connu du document US2016288578 un pneumatique pour véhicule tout terrain spécifiquement adapté aux sols sableux. Ce véhicule tout terrain comporte une bande de roulement comprenant une pluralité de blocs allongés en forme de godet (« paddle » en anglais), chaque bloc allongé présentant une face interne incurvée. Cette face interne incurvée est adaptée pour déplacer une masse de sable du sol sableux et faire avancer en réaction le véhicule. Les blocs allongés sont arrangés par pairs de blocs et ils s'étendent de manière oblique sur la bande de roulement. Bien que performant sur des sols sableux, un tel pneumatique est peu adapté pour des roulages sur des sols rigides, par exemple sur une route goudronnée. En effet, des contacts répétés des blocs allongés sur un tel sol rigide entraîneraient à terme une usure prématurée voire un arrachement de tout ou partie de ces blocs allongés. Les performances en traction d'un véhicule agricole polyvalent comportant de tels pneumatiques seraient alors fortement diminuées suite à l'usure prématurément de ces blocs allongés. Un autre pneumatique agricole est décrit dans EP 3 150 405 A1.

Des pneumatiques non-agricoles comprenant des blocs ayant une cavité sont divulgués dans EP 3 281 868 A1, EP 2 141 031 A1 et JP 2005 263055 A. Toutefois, ces blocs, étant situés sur les zones axialement extérieures délimitant la bande de roulement, n'apportent aucun bénéfice à la traction dans les champs.

Il existe donc un besoin de proposer un pneumatique pour véhicule agricole polyvalent qui soit adapté à des usages mixtes à la fois sur des sols peu cohésifs (sols sableux, sols boueux) et sur des sols rigides (routes goudronnées) et qui conserve dans le temps une bonne résistance à l'usure.

### Exposé de l'invention

L'invention vise à proposer un pneumatique pour véhicule agricole, ayant une capacité de traction améliorée sur des sols peu cohésifs, sans dégrader ses autres performances telle que la résistance aux arrachements, la résistante à l'usure sur route, la résistance au roulement, le confort vibratoire.

L'invention concerne ainsi un pneumatique pour véhicule agricole comprenant une bande de roulement en matériau caoutchoutique et deux zones axialement extérieures délimitant ladite bande de roulement. La bande de roulement est destinée à entrer en contact avec un sol au cours d'un roulage du pneumatique. Les zones axialement extérieures sont adaptées pour relier mécaniquement le pneumatique à une jante. Chaque zone axialement extérieure comprend un flanc et une épaule disposée entre ledit flanc et la bande de roulement. Le pneumatique comprend en outre une pluralité de blocs répartis selon une direction circonférentielle. Chaque bloc a une longueur L et une hauteur H avec L>H, cette longueur étant mesurée selon la direction circonférentielle à partir d'une face latérale du bloc. Chaque bloc de la pluralité de blocs comporte une cavité débouchant sur la face latérale en formant une ouverture sur cette face latérale. La cavité a une profondeur p et une largeur d'ouverture l. En outre, les blocs de la pluralité de blocs sont présents dans au moins une des deux zones axialement extérieures, lesdits blocs n'étant pas présents dans la bande de roulement.

Selon l'invention, les blocs sont présents à l'épaule dans le prolongement de la bande de roulement.

Par « pneumatique », on entend tous les types de bandages en matériau caoutchoutique soumis en roulage à une pression interne.

Par « matériau caoutchoutique », on entend un élastomère diénique, c'est-à-dire de manière connue un élastomère issu d'au moins en partie (c'est-à-dire homopolymère ou copolymère) de monomères diènes (monomères porteurs de doubles liaisons carbone-carbone, conjuguées ou non).

Par « bande de roulement » d'un pneumatique, on entend une quantité de matériau caoutchoutique délimitée par une surface de roulement. La surface de roulement regroupe l'ensemble des points du pneumatique qui vont entrer en contact avec un sol dans des conditions usuelles de roulage. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et son code vitesse. Ces conditions d'utilisation peuvent aussi être dites « conditions nominales » ou « conditions d'usage ». A titre d'exemple pour un pneumatique pour véhicule agricole, les conditions usuelles de roulage sont des conditions de roulage en ligne droite (sans carrossage) sur un sol rigide plan, par exemple une route goudronnée, à la pression de gonflage minimale recommandée pour la capacité de charge indiquée sur le pneumatique et à une charge correspondant à 0,8 fois ladite capacité de charge indiquée sur le pneumatique.

Par « deux zones axialement extérieures », on entend les zones du pneumatique délimitant la bande de roulement et adaptées pour relier mécaniquement ladite bande de roulement à une jante. Chaque zone axialement extérieure comprend une épaule et un flanc.

Par « épaule », on entend une partie du pneumatique prolongeant la bande de roulement dudit pneumatique jusqu'au flanc. L'épaule du pneumatique ne touche par le sol dans des conditions usuelles de roulage sur un sol rigide, par exemple sur une route goudronnée. Cependant, l'épaule du pneumatique peut être sollicitée en roulage, notamment sur des sols peu cohésifs (sol sableux, sol boueux).

Par « flanc », on entend une partie latérale du pneumatique qui prolonge l'épaule jusqu'à un bourrelet. Le bourrelet est destiné à recevoir un crochet de jante d'une roue.

Par « direction radiale », on entend une direction qui est perpendiculaire à l'axe de rotation du pneumatique.

Par « direction axiale », on entend une direction parallèle à l'axe de rotation du pneumatique.

Par « direction circonférentielle », on entend une direction qui est tangente à tout cercle centré sur l'axe de rotation. Cette direction est perpendiculaire à la fois à la direction axiale et à la direction radiale.

Lors d'un roulage sur un sol rigide (route goudronnée), c'est la bande de roulement du pneumatique qui est sollicitée pour entrer en contact avec ce sol. Sur un sol peu cohésif (sol sableux, sol boueux), l'épaule du pneumatique et une partie du flanc sont sollicitées du fait d'un enfoncement du pneumatique dans ce sol. En prévoyant des blocs dans les zones axialement extérieures, on s'assure d'un meilleur fonctionnement du pneumatique sur des sols peu cohésifs. En effet les cavités des blocs, en recevant du sable ou de la boue, compactent ces matériaux grâce au mouvement de rotation du pneumatique généré par la transmission du véhicule. Il en résulte la création d'une force de résistance du sol qui permet l'avancement du véhicule. Comme les blocs ne s'étendent pas sur la bande de roulement du pneumatique, ceux-ci ne sont pas ou peu sollicités lors des roulages sur des sols rigides. L'usure de ces blocs est alors maîtrisée et leur utilisation sur des sols peu cohésifs est maintenue dans le temps.

De préférence, les blocs s'étendent sur le flanc.

De préférence, la longueur L du bloc est déterminée de sorte que L>1,3*H.

De préférence, la profondeur p de la cavité est supérieure ou égale à 15% de la largeur d'ouverture l de ladite cavité.

De préférence, l'aire de l'ouverture de la cavité sur la face latérale est supérieure ou égale à 30% de l'aire de ladite face latérale.

De préférence, l'aire de l'ouverture de la cavité sur la face latérale est inférieure ou égale à 90% de l'aire de ladite face latérale.

Dans une variante de réalisation, selon une vue en coupe, la cavité a une forme concave. Cette vue en coupe est, ici, une vue en coupe circonférentielle réalisée dans un plan de coupe qui s'étend selon une direction radiale et dans la longueur du bloc. Ce plan de coupe sépare le bloc en, par exemple, deux ½ blocs.

Dans une autre variante de réalisation, selon une vue en coupe, la cavité a un fond rectiligne, ledit fond étant incliné par rapport à une direction radiale.

De préférence, la face latérale est inclinée par rapport à une direction radiale.

De préférence, l'ouverture de la cavité s'étend sur au moins 80% de la hauteur H de la face latérale.

De préférence, les blocs de la pluralité de blocs sont venus de matière avec la ou les zones axialement extérieure(s) dudit pneumatique.

De préférence, le bloc a une autre face latérale opposée à la face latérale comprenant ladite ouverture, ladite autre face latérale comportant une autre ouverture.

La présente invention sera mieux comprise à la lecture de la description détaillée de modes de réalisation pris à titre d'exemples nullement limitatifs et illustrés par les dessins annexés sur lesquels :
La figure 1 est une vue en perspective montrant un pneumatique pour véhicule agricole selon l'invention ;
La figure 2 est une vue de détail d'une partie du pneumatique de la figure 1 ;
La figure 3 est une vue schématique d'une partie du pneumatique de la figure 1, dans des conditions usuelles de roulage ;
La figure 4 est une vue schématique d'une partie du pneumatique de la figure 1, en roulage sur un sol peu cohésif ;
La figure 5 est une vue en perspective montrant un bloc du pneumatique de la figure 1 ;
La figure 6 est une vue en coupe selon A-A du bloc de la figure 5 ;
Les figures 7A-7F sont des vues en coupe schématiques du bloc de la figure 5, selon différents modes de réalisation de l'invention ;
La figure 8 illustre schématiquement une éprouvette de référence et une éprouvette de travail utilisées pour démontrer les performances de l'invention ;
La figure 9 est une vue schématique d'une coupe du bloc du pneumatique de la figure 1, selon un autre mode de réalisation de l'invention.

L'invention n'est pas limitée aux modes de réalisation et variantes présentées et d'autres modes de réalisation et variantes apparaîtront clairement à l'homme du métier.

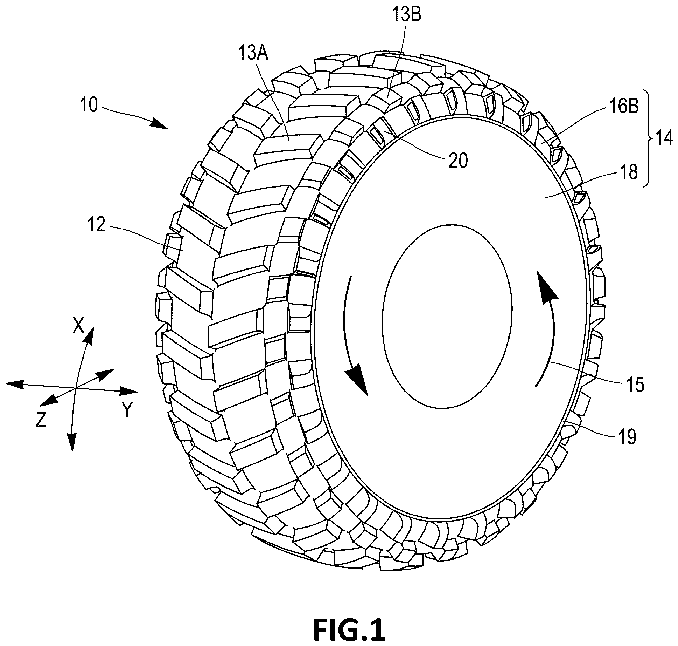

A la figure 1, on a représenté un pneumatique 1 destiné à équiper un essieu moteur d'un engin agricole. Dans l'exemple du mode de réalisation de la figure 1, ce pneumatique 1 est un pneumatique radial comprenant une armature de renforcement (non représentée) constituée d'une armature de sommet, radialement intérieure à la bande de roulement, et d'une armature de carcasse, radialement intérieure à l'armature de sommet.

L'armature de sommet d'un pneumatique radial pour véhicule agricole comprend une superposition de couches de sommet s'étendant circonférentiellement (selon la direction X), radialement (selon la direction Z) à l'extérieur de l'armature de carcasse. Chaque couche de sommet est constituée de renforts enrobés par un mélange élastomérique et parallèles entre eux. Les renforts de couche de sommet peuvent être constitués par des matériaux polymériques textiles, tels qu'un polyester, par exemple un polyéthylène téraphtalate (PET), un polyamide aliphatique, par exemple un nylon, un polyamide aromatique, par exemple l'aramide, ou encore la rayonne, ou par des matériaux métalliques, tels que l'acier.

L'armature de carcasse d'un pneumatique radial pour véhicule automobile comprend au moins une couche de carcasse reliant deux bourrelets entre eux. Une couche de carcasse comprend des renforts enrobés par un matériau polymérique comprenant un élastomère, obtenu par mélangeage, ou mélange élastomérique. Les renforts de couche de carcasse sont le plus souvent constitués par des matériaux polymériques textiles, tels qu'un polyester, par exemple un polyéthylène téréphtalate (PET), un polyamide aliphatique, par exemple un nylon, un polyamide aromatique, par exemple l'aramide, ou encore la rayonne. Les renforts d'une couche de carcasse sont sensiblement parallèles entre eux et forment, avec la direction circonférentielle (direction X), un angle compris entre 85° et 95°.

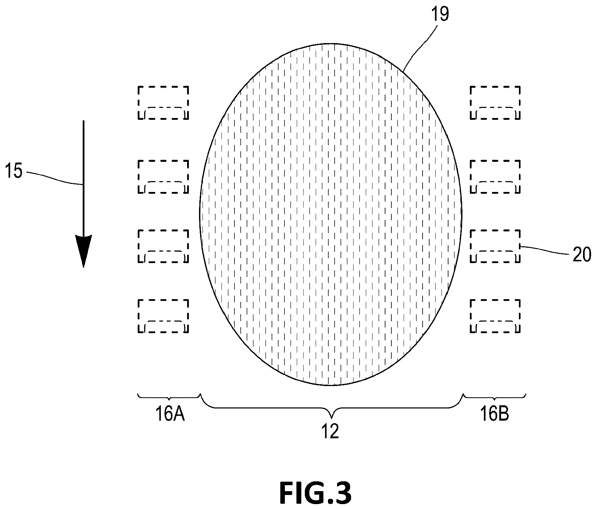

Le pneumatique 10 de la figure 1 comprend également une bande de roulement 12 en matériau caoutchoutique et deux zones axialement extérieures 14 délimitant ladite bande de roulement 12, dont une seule est ici représentée entièrement sur la figure 1. La bande de roulement 12 est destinée à entrer en contact avec un sol au cours d'un roulage du pneumatique 10. Dans des conditions usuelles de roulage sur un sol rigide, par exemple sur une route goudronnée, la bande de roulement 12 forme avec le sol une aire de contact 19 illustrée à la figure 3. L'aire de contact 19 regroupe l'ensemble des points de la bande de roulement 12 en contact avec le sol à un instant donné dans des conditions usuelles de roulage. Comme il a déjà été précisé, par conditions usuelles de roulage on entend des conditions de roulage en ligne droite sur un sol rigide, par exemple une route goudronnée, à la pression de gonflage minimale recommandée pour la capacité de charge indiquée sur le pneumatique et à une charge correspondant à 0,8 fois ladite capacité de charge indiquée sur le pneumatique. A titre d'exemple, pour un pneumatique pour véhicule agricole de la marque MICHELIN ayant pour marquage les éléments suivants : 600/70R30 165D TL, l'indice de charge 165 correspond à une capacité de charge de 5150 Kg et une pression de gonflage minimale recommandée pour cette charge de 1,6 bars. L'aire de contact 19 de la figure 3 est formée par un écrasement sur le sol rigide à une pression de 1,6 bars et à la charge de 4120 Kg (5150*0,8). L'ensemble des aires de contact 19 déterminées à différents moments de roulage forment une surface de roulement de la bande de roulement 12.

La bande de roulement 12 du pneumatique 1 comprend une pluralité d'éléments en relief 13A, 13B, appelés blocs, s'étendant radialement (direction Z) vers l'extérieur à partir d'une surface portante jusqu'à la surface de roulement. La bande de roulement 12 de la figure 1 comprend ainsi une pluralité de premiers blocs 13A en forme de barrettes allongées globalement parallélépipédiques. Ces premiers blocs 13A sont organisés en deux séries de premiers blocs 13A disposées de part et d'autre d'une partie centrale de la bande de roulement 12. Ces deux séries de premiers blocs 13A sont décalées l'une de l'autre le long de la direction circonférentielle (direction X). La bande de roulement 12 comprend également une pluralité de seconds blocs 13B. Ces seconds blocs 13B sont disposés axialement plus à l'extérieur par rapport aux premiers blocs 13A et entre deux blocs 13A adjacents. Ainsi, chaque premier bloc 13A s'étend sur une partie seulement de la ½ largeur de la bande de roulement 12. Cependant, les premiers blocs 13A, et les seconds blocs 13B se complètent selon la direction axiale (direction Y) pour rigidifier la bande de roulement 12 sur toute sa largeur. Le découplage entre les premiers blocs 13A et les seconds blocs 13B permet d'améliorer la mise à plat de la bande de roulement 12 au cours du roulage.

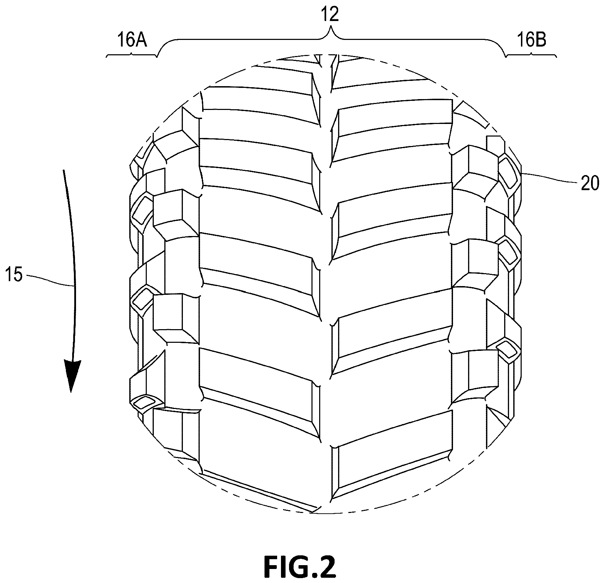

Le pneumatique 10 de la figure 1 comprend également deux zones axialement extérieures 14, dont une seule est ici représentée. Les deux zones axialement extérieures 14 délimitent la bande de roulement 12 et elles sont adaptées pour relier mécaniquement le pneumatique 10 à une jante (non représentée). Chaque zone axialement extérieure 14 comprend un flanc 18 et une épaule 16A, 16B disposée entre ledit flanc 18 et la bande de roulement 12. Une épaule 16A, 16B prolonge la bande de roulement 12, comme le montre la figure 2. Chaque flanc 18 comprend à son extrémité un crochet 19 adapté pour être relié à une jante. Au moins une zone axialement extérieure 14 comprend une pluralité de troisièmes blocs 20 répartis selon une direction circonférentielle. Ces troisièmes blocs 20 sont donc décalés axialement par rapport aux premiers blocs 13A et aux seconds blocs 13B et ils sont alignés ou non axialement avec les premiers blocs 13A et/ou les seconds blocs 13B. Comme il est illustré à la figure 3, les troisièmes blocs 20 ne sont pas dans l'aire de contact 19 dans les conditions usuelles de roulage, car ils ne sont pas présents dans la bande de roulement 12 mais dans l'épaule 16A, 16B prolongeant la bande de roulement 12. Ainsi, lors d'un roulage sur un sol rigide les troisièmes blocs 20 ne touchent pas ce sol. Le niveau d'usure de ces troisièmes blocs 20 est alors limité.

Préférentiellement, les troisièmes blocs 20 de la pluralité de blocs sont venus de matière avec la ou les zones axialement extérieure(s) 14 dudit pneumatique. C'est-à-dire que les blocs 20 et les zones axialement extérieures 14 sont réalisés dans un même matériau. Ces troisièmes blocs 20 peuvent ainsi être obtenus lors d'une même opération de moulage que le reste du pneumatique.

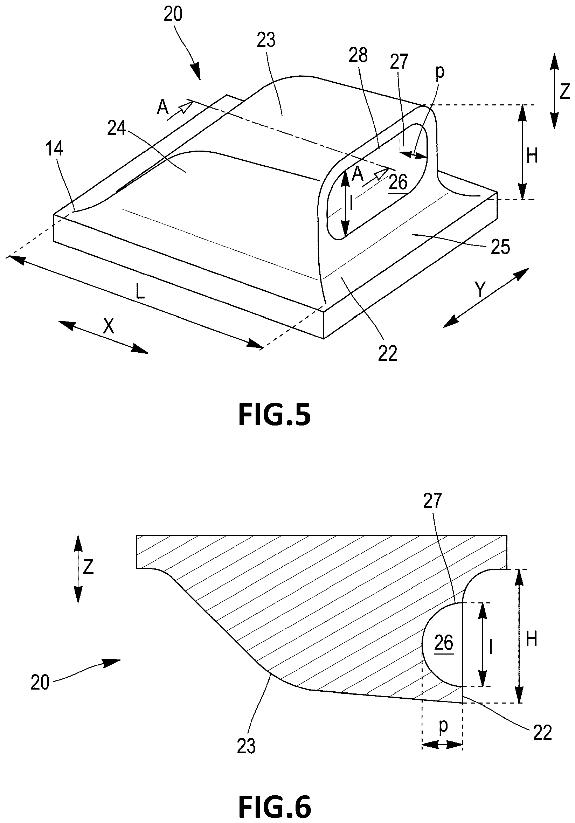

La figure 5 est une vue en perspective d'un troisième bloc 20 de la zone axialement extérieure 14. Ce troisième bloc 20 est présent dans l'épaule 16A, 16B du pneumatique 10. En variante, le troisième bloc 20 s'étend également sur le flanc 18. Le troisième bloc 20 comprend ici une première face latérale 22 s'étendant dans la largeur du troisième bloc 20 (selon la direction Y) et deux secondes faces latérales 24 (dont une seule est ici représentée) s'étendant perpendiculairement à la première face latérale 22 dans la longueur L du troisième bloc 20. La première face latérale 22 et les secondes faces latérales 24 sont reliées par une face externe 23 courbe. La face externe 23 s'étend de la première face latérale 22 à partir d'une hauteur H jusqu'à la zone axialement externe 14 de hauteur nulle. La hauteur H correspond ici à la hauteur maximale du troisième bloc 20 mesurée selon une direction radiale Z. La longueur L correspond à la longueur d'extension maximale des secondes faces latérales 24 mesurée selon la direction circonférentielle X à partir de la première face latérale 22. La longueur L du bloc est ici très supérieure à la hauteur H. Dans un mode de réalisation préférentiel, la longueur L du troisième bloc 20 est déterminée de sorte que la longueur L est supérieure à 1,3 fois la hauteur H du bloc 20. Comme il est illustré aux figures 5 et 6, le troisième bloc 20 comprend une cavité 26 débouchant sur la première face latérale 22 en formant une ouverture 28 sur cette première face latérale 22. La cavité 26 a un fond 27 et une profondeur p mesurée entre ledit fond 27 et la première face latérale 22 selon la direction circonférentielle X. Cette profondeur p correspond à la profondeur maximale de la cavité 26. La cavité 26 a également une largeur d'ouverture l mesurée selon la direction radiale Z. Cette largeur d'ouverture l correspond à la largeur maximale de la cavité 26. La cavité 26 est destinée à stocker de la matière (boue, sable). Cette cavité 26 est notamment active lorsque le pneumatique roule selon le sens de roulement 15 illustré aux figures 1 à 4. Selon ce sens de roulement 15, la première face latérale 22 est une face d'attaque et la face externe 23, dans sa partie inclinée vers la zone axialement extérieure 14, est une face de fuite. La face d'attaque entre la première dans l'aire de contact 19 et la face de fuite est celle qui sort la dernière de ladite aire de contact 19.

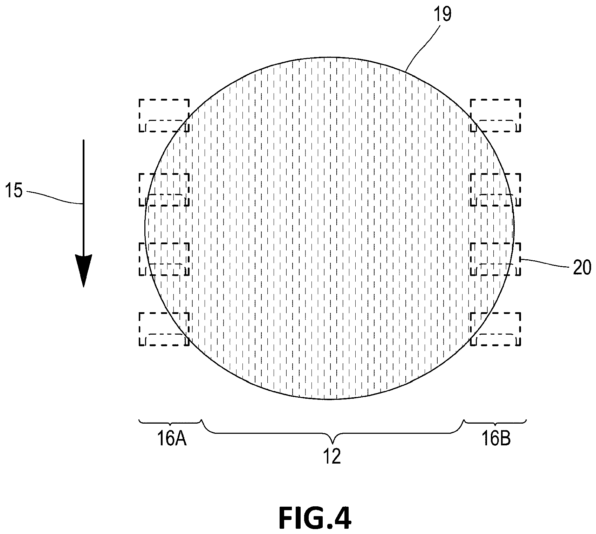

La figure 4 illustre de manière schématique une aire de contact 19 de la bande de roulement en roulage sur un sol peu cohésif. Le pneumatique 10 ayant tendance à s'enfoncer dans ce type de sol, l'aire de contact 19 est plus étendue. Dès lors, les troisièmes blocs 20 entrent, au moins en partie, dans cette aire de contact 19 et ils deviennent alors actifs pour stocker de la matière (boue, sable) au cours du roulage. De préférence l'aire de l'ouverture 28 de la cavité 26 sur la face latérale 22 est supérieure ou égale à 30% de l'aire de cette face latérale 22. De cette manière, les cavités 26 des troisièmes blocs 20 sont sollicitées rapidement dès leur entrée dans l'aire de contact 19. Sur la figure 5, la cavité 26 est globalement centrée sur la première face latérale 22.

Préférentiellement, l'aire de l'ouverture 28 de la cavité 26 sur la face latérale 22 est inférieure ou égale à 90% de l'aire de ladite face latérale 22. De cette manière, on s'assure que les éléments de matière entourant l'ouverture 28 de la cavité 26 sont suffisants pour assurer une rigidité minimale au troisième bloc 20 lors de son entrée dans l'aire de contact 19. On notera également que le troisième bloc 20 comprend une partie de raccord 25 prolongeant la face latérale 22. Cette partie de raccord 25 a une forme incurvée. Elle est destinée à ancrer le troisième bloc 20 sur la zone axialement extérieure 14.

Préférentiellement, la profondeur p de la cavité 26 est supérieure ou égale à 15% de la largeur d'ouverture l de ladite cavité 26. On s'assure ainsi d'une bonne capacité de la cavité 26 à stocker le sable ou la boue en vue de faire avancer le véhicule.

La figure 6 illustre plus particulièrement un mode de réalisation dans lequel la cavité 26 possède, vue en coupe, une forme concave.

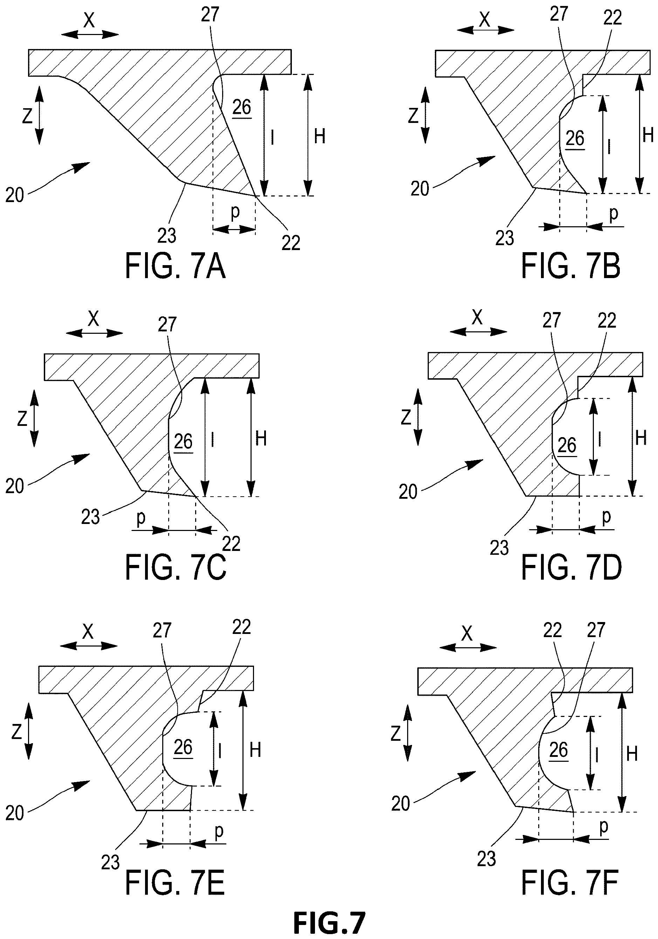

Les figures 7A-7F illustrent des variantes de réalisation de cette cavité 26. A la figure 7A, la cavité 26 possède un fond 27 rectiligne. Ce fond 27 est incliné par rapport à la direction radiale Z. Cette inclinaison est par exemple de l'ordre de 45° par rapport à ladite direction radiale. Les figures 7B-7F illustrent des variantes dans lesquelles la cavité 26 possède une forme concave. Plus particulièrement à la figure 7B, la cavité 26 s'étend partiellement sur la hauteur H du troisième bloc 20. Cette cavité 26 est décalée vers la face externe 23. Sur la figure 7C, la cavité 26 s'étend sur toute la hauteur H du troisième bloc 20. Aux figures 7D et 7E, la face externe 23 fait un angle nul avec la direction circonférentielle X. Plus particulièrement à la figure 7E, la face latérale 22 est inclinée par rapport à la direction radiale Z. A la figure 7F, la face externe 23 et la face latérale 22 sont respectivement inclinées par rapport à la direction circonférentielle X et par rapport à la direction radiale Z.

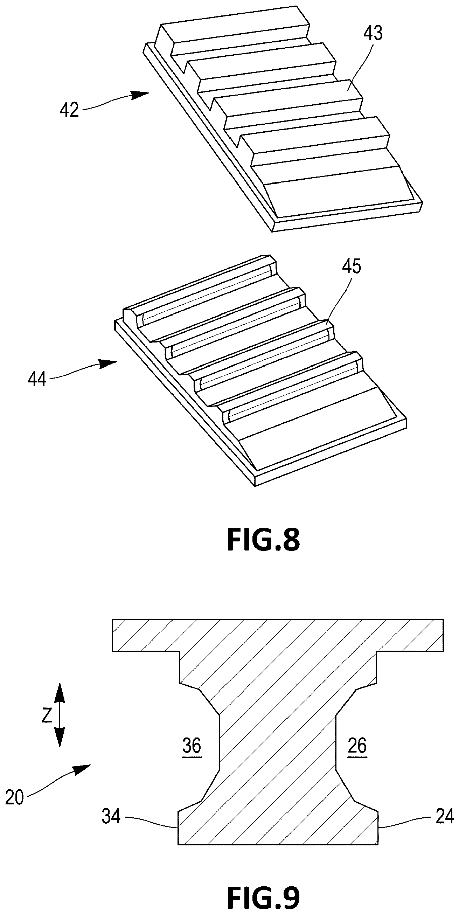

Le tableau 1 ci-dessous illustre les résultats en traction d'une éprouvette de travail 44 comportant des blocs 45 conformes à l'invention par rapport à une éprouvette de référence 42. Ces éprouvettes 42, 44 sont illustrées à la figure 8. L'éprouvette de référence 42 correspond à une bande de caoutchouc comportant une pluralité de barrettes 43. Ces barrettes 43 se présentent sous la forme de parallélépipèdes de section globalement rectangulaire. L'éprouvette de travail 44 comporte une pluralité de blocs 45 qui sont conformes au bloc de la figure 7C. Comme il a déjà été mentionné, le bloc de la figure 7C comporte une cavité 26 qui s'étend sur toute la hauteur H du bloc. L'éprouvette de travail 44 et l'éprouvette de référence 42 sont adaptées pour pénétrer dans un échantillon de sol qui reproduit les caractéristiques d'un sol peu cohésif et ces éprouvettes 42, 44 sont mises en glissement par rapport à cet échantillon de sol. A titre d'exemple, l'échantillon de sol comprend un sol argileux faiblement compacté (0,5 bars) et très fortement humide, c'est-à-dire à quasi saturation en eau (42% d'humidité). Le tableau 1 illustre les performances de l'éprouvette de travail 44 par rapport à l'éprouvette de référence 42 à différents taux de glissement :

**[Tableau 1]**

| Taux de glissement en % | Performance échantillon de travail/Performance échantillon de référence |
|---|---|
| 5 | 152% |
| 7 | 151% |
| 9 | 153% |
| 11 | 149% |
| 13 | 145% |
| 15 | 143% |

Globalement, le gain moyen apporté par l'éprouvette de travail 44 vis-à-vis de l'éprouvette de référence 42 est de 50%. Ces performances se retrouvent, au moins en partie, sur des pneumatiques pour véhicule agricole comportant sur la ou leurs zone(s) axialement extérieure(s) les blocs conformes à l'invention.

La figure 9 illustre un autre mode de réalisation d'un bloc 20 selon l'invention. Dans ce mode de réalisation, le bloc 20 comprend deux faces latérales opposées 24, 34 et deux cavités 26, 36 qui débouchent respectivement sur une des faces latérales 24, 34. De cette manière, le bloc 20 est actif à la fois en marche avant, c'est-à-dire selon la direction normale de déplacement du véhicule et en marche arrière. Selon le sens de déplacement, marche avant ou marche arrière, les faces latérales 24, 34 sont alternativement soit une face d'attaque soit une face de fuite. Les cavités 26, 36 sont ici identiques et elles sont conformes à la cavité de la figure 7D. En variante, les cavités 26 et 36 peuvent être de forme différente. Toutes les combinaisons de formes entre les différents modes de réalisation des figures 6, 7A-7F sont possibles.

L'invention n'est pas limitée aux modes de réalisation et variantes présentées et d'autres modes de réalisation et variantes apparaîtront clairement à l'homme du métier.

Ainsi, le pneumatique 10 peut comporter une seule série de troisièmes blocs 20 présents uniquement sur une seule zone axialement extérieure 14.

## Revendications

1. Pneumatique pour véhicule agricole comprenant une bande de roulement (12) en matériau caoutchoutique et deux zones axialement extérieures (14) délimitant ladite bande de roulement (12), la bande de roulement (12) étant destinée à entrer en contact avec un sol au cours d'un roulage du pneumatique, lesdites zones axialement extérieures (14) étant adaptées pour relier mécaniquement ladite bande de roulement (12) à une jante, chaque zone axialement extérieure (14) comprenant un flanc (18) et une épaule (16A, 16B) disposée entre ledit flanc (18) et la bande de roulement (12), ledit pneumatique (10) comportant une pluralité de blocs (20) répartis selon une direction circonférentielle (X), chaque bloc (20) ayant une longueur L et une hauteur H avec L supérieure à H, ladite longueur L étant mesurée selon la direction circonférentielle (X) à partir d'une face latérale (22) dudit bloc (20), chaque bloc (20) de la pluralité de blocs (20) comportant une cavité (26) débouchant sur ladite face latérale (22) en formant une ouverture (28) sur cette face latérale (22), ladite cavité (26) ayant une profondeur p et une largeur d'ouverture l, les blocs de la pluralité de blocs (20) étant présents dans au moins une des deux zones axialement extérieures (14), lesdits blocs (20) n'étant pas présents dans la bande de roulement (12), **caractérisé en ce que** les blocs (20) sont présents à l'épaule (16A, 16B) dans le prolongement de la bande de roulement (12).

2. Pneumatique selon la revendication 1, **dans lequel** les blocs (20) s'étendent sur le flanc (18).

3. Pneumatique selon l'une des revendications 1 ou 2, **dans lequel** la longueur L du bloc (20) est déterminée de sorte que ladite longueur L est supérieure à 1,3 fois la hauteur H dudit bloc (20).

4. Pneumatique selon l'une quelconque des revendications 1 à 3, **dans lequel** la profondeur p de la cavité (26) est supérieure ou égale à 15% de la largeur d'ouverture l de ladite cavité (26).

5. Pneumatique selon l'une quelconque des revendications 1 à 4, **dans lequel** l'aire de l'ouverture (28) de la cavité (26) sur la face latérale (22) est supérieure ou égale à 30% de l'aire de ladite face latérale (22).

6. Pneumatique selon la revendication 5, **dans lequel** l'aire de l'ouverture (28) de la cavité (26) sur la face latérale (22) est inférieure ou égale à 90% de l'aire de ladite face latérale (22).

7. Pneumatique selon l'une quelconque des revendications 1 à 6, **dans lequel,** selon une vue en coupe, la cavité (26) a une forme concave.

8. Pneumatique selon l'une quelconque des revendications 1 à 6, **dans lequel,** selon une vue en coupe, la cavité (26) a un fond (27) rectiligne, ledit fond (27) étant incliné par rapport à une direction radiale (Z).

9. Pneumatique selon l'une quelconque des revendications 1 à 8, **dans lequel** la face latérale (22) est inclinée par rapport à une direction radiale (Z).

10. Pneumatique selon l'une quelconque des revendications 1 à 9, **dans lequel** l'ouverture (28) de la cavité (26) s'étend sur au moins 80 % de la hauteur H de la face latérale (22).

11. Pneumatique selon l'une quelconque des revendications 1 à 10, **dans lequel** les blocs (20) de la pluralité de blocs sont venus de matière avec la ou les zones axialement extérieure(s) (14) dudit pneumatique.

12. Pneumatique selon l'une quelconque des revendications 1 à 11, **dans lequel** le bloc (20) a une autre face latérale (34) opposée à la face latérale (24) comprenant ladite ouverture (26), ladite autre face latérale (34) comportant une autre ouverture (36).

## Patentansprüche

1. Reifen für ein landwirtschaftliches Fahrzeug, der einen Laufstreifen (12) aus Kautschukmaterial und zwei axial äußere Bereiche (14), die den Laufstreifen (12) begrenzen, umfasst, wobei der Laufstreifen (12) dazu bestimmt ist, während des Rollens des Reifens mit einem Boden in Kontakt zu kommen, wobei die axial äußeren Bereiche (14) dafür eingerichtet sind, den Laufstreifen (12) mit einer Felge mechanisch zu verbinden, wobei jeder axial äußere Bereich (14) eine Seitenwand (18) und eine zwischen der Seitenwand (18) und dem Laufstreifen (12) angeordnete Schulter (16A, 16B) umfasst, wobei der Reifen (10) eine Vielzahl von Blöcken (20) aufweist, die in einer Umfangsrichtung (X) verteilt sind, wobei jeder Block (20) eine Länge L und eine Höhe H aufweist, wobei L größer als H ist, wobei die Länge L in der Umfangsrichtung (X) von einer Seitenfläche (22) des Blocks (20) aus gemessen wird, wobei jeder Block (20) der Vielzahl von Blöcken (20) einen Hohlraum (26) aufweist, der auf der Seitenfläche (22) mündet und dabei eine Öffnung (28) auf dieser Seitenfläche (22) bildet, wobei der Hohlraum (26) eine Tiefe p und eine Öffnungsbreite l aufweist, wobei die Blöcke der Vielzahl von Blöcken (20) in mindestens einem der zwei axial äußeren Bereiche (14) vorhanden sind, wobei die Blöcke (20) im Laufstreifen (12) nicht vorhanden sind, **dadurch gekennzeichnet, dass** die Blöcke (20) an der Schulter (16A, 16B) in der Verlängerung des Laufstreifens (12) vorhanden sind.

2. Reifen nach Anspruch 1, wobei sich die Blöcke (20) auf der Seitenwand (18) erstrecken.

3. Reifen nach einem der Ansprüche 1 oder 2, wobei die Länge L des Blocks (20) derart bemessen ist, dass die Länge L größer als das 1,3-Fache der Höhe H des Blocks (20) ist.

4. Reifen nach einem der Ansprüche 1 bis 3, wobei die Tiefe p des Hohlraums (26) größer oder gleich 15 % der Öffnungsbreite l des Hohlraums (26) ist.

5. Reifen nach einem der Ansprüche 1 bis 4, wobei der Flächeninhalt der Öffnung (28) des Hohlraums (26) auf der Seitenfläche (22) größer oder gleich 30 % des Flächeninhalts der Seitenfläche (22) ist.

6. Reifen nach Anspruch 5, wobei der Flächeninhalt der Öffnung (28) des Hohlraums (26) auf der Seitenfläche (22) kleiner oder gleich 90 % des Flächeninhalts der Seitenfläche (22) ist.

7. Reifen nach einem der Ansprüche 1 bis 6, wobei der Hohlraum (26) in einer Schnittansicht eine konkave Form aufweist.

8. Reifen nach einem der Ansprüche 1 bis 6, wobei der Hohlraum (26) in einer Schnittansicht einen geraden Boden (27) aufweist, wobei der Boden (27) in Bezug auf eine radiale Richtung (Z) geneigt ist.

9. Reifen nach einem der Ansprüche 1 bis 8, wobei die Seitenfläche (22) in Bezug auf eine radiale Richtung (Z) geneigt ist.

10. Reifen nach einem der Ansprüche 1 bis 9, wobei sich die Öffnung (28) des Hohlraums (26) über mindestens 80 % der Höhe H der Seitenfläche (22) erstreckt.

11. Reifen nach einem der Ansprüche 1 bis 10, wobei die Blöcke (20) der Vielzahl von Blöcken stoffschlüssig mit dem oder den axial äußeren Bereich (en) (14) des Reifens verbunden sind.

12. Reifen nach einem der Ansprüche 1 bis 11, wobei der Block (20) eine weitere Seitenfläche (34) aufweist, die der die Öffnung (26) umfassenden Seitenfläche (24) gegenüberliegt, wobei die weitere Seitenfläche (34) eine weitere Öffnung (36) aufweist.

## Claims

1. Tyre for an agricultural vehicle, comprising a tread (12) made of rubbery material and two axially outer zones (14) delimiting said tread (12), the tread (12) being intended to come into contact with the ground while the tyre is running, said axially outer zones (14) being designed to mechanically connect said tread (12) to a rim, each axially outer zone (14) comprising a sidewall (18) and a shoulder (16A, 16B) disposed between said sidewall (18) and the tread (12), said tyre (10) having a plurality of blocks (20) distributed in a circumferential direction (X), each block (20) having a length L and a height H where L is greater than H, said length L being measured in the circumferential direction (X) from a lateral face (22) of said block (20), each block (20) of the plurality of blocks (20) having a cavity (26) that opens onto said lateral face (22), forming an opening (28) in said lateral face (22), said cavity (26) having a depth p and an opening width l, the blocks of the plurality of blocks (20) being present in at least one of the two axially outer zones (14), said blocks (20) not being present in the tread (12), **characterized in that** the blocks (20) are present at the shoulder (16A, 16B) in the continuation of the tread (12).

2. Tyre according to Claim 1, **wherein** the blocks (20) extend over the sidewall (18).

3. Tyre according to either of Claims 1 and 2, **wherein** the length L of the block (20) is determined such that said length L is more than 1.3 times the height H of said block (20).

4. Tyre according to any one of Claims 1 to 3, **wherein** the depth p of the cavity (26) is greater than or equal to 15% of the opening width l of said cavity (26).

5. Tyre according to any one of Claims 1 to 4, **wherein** the area of the opening (28) of the cavity (26) onto the lateral face (22) is greater than or equal to 30% of the area of said lateral face (22).

6. Tyre according to Claim 5, **wherein** the area of the opening (28) of the cavity (26) onto the lateral face (22) is less than or equal to 90% of the area of said lateral face (22).

7. Tyre according to any one of Claims 1 to 6, **wherein,** in a cross-sectional view, the cavity (26) has a concave shape.

8. Tyre according to any one of Claims 1 to 6, **wherein,** in a cross-sectional view, the cavity (26) has a rectilinear bottom (27), said bottom (27) being inclined with respect to a radial direction (Z).

9. Tyre according to any one of Claims 1 to 8, **wherein** the lateral face (22) is inclined with respect to a radial direction (Z).

10. Tyre according to any one of Claims 1 to 9, **wherein** the opening (28) of the cavity (26) extends over at least 80% of the height H of the lateral face (22).

11. Tyre according to any one of Claims 1 to 10, **wherein** the blocks (20) of the plurality of blocks are formed integrally with the axially outer zone(s) (14) of said tyre.

12. Tyre according to any one of Claims 1 to 11, **wherein** the block (20) has another lateral face (34) on the opposite side from the lateral face (24) comprising said opening (26), said other lateral face (34) having another opening (36).
